# EUROPEAN PATENT APPLICATION

(11) **EP 3 141 882 A1**
(43) Date of publication of application: **15.03.2017**
(21) Application number: 16188090.1
(22) Date of filing: 09.09.2016
(51) Int. Cl.: G01N 1/22, B01F 5/04, B01F 5/06, G01M 15/10

(54) **EXHAUST SAMPLING SYSTEM INCLUDING A MIXER THAT MIXES EXHAUST GAS AND DILUTION GAS**

(30) Priority: 11.09.2015 US 201562217238 P; 08.09.2016 US 201615259659
(71) Applicant: AVL Test Systems, Inc., Plymouth, MI 48170 (US)
(72) Inventor: SILVIS, William, Martin, Ann Arbor, MI 48105 (US)
(74) Representative: Witte, Weller & Partner Patentanwälte mbB

(57) **Abstract**

A mixing system for an exhaust sampling system is disclosed. In one example, the mixing system includes a mixing passage, an exhaust pipe, and a mixer. The mixing passage has a dilution gas inlet configured to receive a dilution gas. The exhaust pipe provides exhaust gas to the mixing passage. The mixer is disposed within the mixing passage and is configured to mix the dilution gas and the exhaust gas. The mixer has an inlet and an outlet, where the mixer inlet is configured to receive the exhaust gas, and the mixer outlet is disposed downstream of the mixer inlet. The mixer includes a plurality of radially extending lobes that are circumferentially disposed about a longitudinal axis of the mixer.

## Description

### CROSS-REFERENCE TO RELATED APPLICATIONS

This application claims the benefit of U.S. Provisional Application No. 62/217,238, filed on September 11, 2015. The entire disclosure of the application referenced above is incorporated herein by reference.

### FIELD

The present disclosure relates to exhaust gas sampling systems, and more particularly, to systems and methods for mixing exhaust gas and dilution gas.

### BACKGROUND

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Exhaust sampling systems are conventionally used in conjunction with an engine to determine the mass of pollutants in exhaust gas produced by the engine. Such exhaust sampling systems may include a constant volume sampler (CVS) or a bag mini-diluter (BMD) that extract diluted exhaust gas for analysis in an effort to determine the pollutant mass of the particular engine. During operation of a CVS system, for example, engine exhaust is diluted with a dilution gas, and a sample of the diluted exhaust is proportionally extracted and stored in one or more sample bags during a test interval or test phase. The contents of the sample bags may be analyzed to determine the pollutant mass over the test phase for the particular engine.

In a CVS system, if the exhaust gas and the dilution gas are not mixed thoroughly, the samples collected in the sample bags may not have an expected ratio of exhaust gas and dilution gas. In turn, the pollutant mass determined by the analyzer may not be representative of the actual pollutant mass in exhaust gas produced by the engine. In other words, poor mixing of the exhaust gas and the dilution gas may cause the results of the pollutant mass analysis to be inaccurate.

### SUMMARY

This section provides a general summary of the disclosure, and is not a comprehensive disclosure of its full scope or all of its features.

A mixing system for an exhaust sampling system is disclosed. In one example, the mixing system includes a mixing passage, an exhaust pipe, and a mixer. The mixing passage has a dilution gas inlet configured to receive a dilution gas. The exhaust pipe provides exhaust gas to the mixing passage. The mixer is disposed within the mixing passage and is configured to mix the dilution gas and the exhaust gas. The mixer has an inlet and an outlet, where the mixer inlet is configured to receive the exhaust gas, and the mixer outlet is disposed downstream of the mixer inlet. The mixer includes a plurality of radially extending lobes that are circumferentially disposed about a longitudinal axis of the mixer.

In another example, the mixing system includes a mixer configured to mix dilution gas and exhaust gas in a mixing passage of an exhaust sampling system. The mixer has an inlet and an outlet and includes a plurality of radially extending lobes that are circumferentially disposed about a longitudinal axis of the mixer and that extend to the mixer outlet. The lobes expand radially outward from the mixer inlet to the mixer outlet such that a first outer diameter of the mixer at the mixer inlet is less than a second outer diameter of the mixer at the mixer outlet. The mixer includes valleys between the lobes that expand radially inward from the mixer inlet to the mixer outlet such that a first inner diameter of the mixer at the mixer inlet is greater than a second inner diameter of the mixer at the mixer outlet.

A method of mixing an exhaust gas and a dilution gas in an exhaust sampling system is also disclosed. The method includes conveying an exhaust gas through an exhaust pipe and an exhaust gas passage of a mixer, and conveying a dilution gas around an outer surface of the mixer. The mixer has a plurality of radially extending lobes. The flow of the exhaust gas through the exhaust gas passage of the mixer and the flow of the dilution gas around the radially extending lobes of the mixer facilitate the formation of a shear layer between the exhaust gas and the dilution gas to promote mixing of the exhaust gas and the dilution gas.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure. The present disclosure will become more fully understood from the detailed description and the accompanying drawings, wherein:
FIG. 1 is a schematic view of a CVS sampling system in accordance with the principles of the present disclosure;
FIG. 2 is a perspective view of a mixer in accordance with the principles of the present disclosure;
FIG. 3 is a side view of the mixer of FIG. 2;
FIG. 4 is a front view of the mixer of FIG. 2;
FIG. 5 is a rear view of the mixer of FIG. 2;
FIG. 6 is a perspective view of the mixer of FIG. 2 and a plug for insertion into an exhaust gas passage of the mixer;
FIG. 7 is a sectioned side view of the mixer of FIG. 2 with the plug of FIG. 6 inserted into the exhaust gas passage of the mixer;
FIG. 8 is a side view of another mixer in accordance with the principles of the present disclosure;
FIG. 9 is a front view of the mixer of FIG. 8; and
FIG. 10 is a rear view of the mixer of FIG. 8.

Corresponding reference numerals indicate corresponding parts throughout the several views of the drawings.

### DETAILED DESCRIPTION

Example embodiments will now be described more fully with reference to the accompanying drawings.

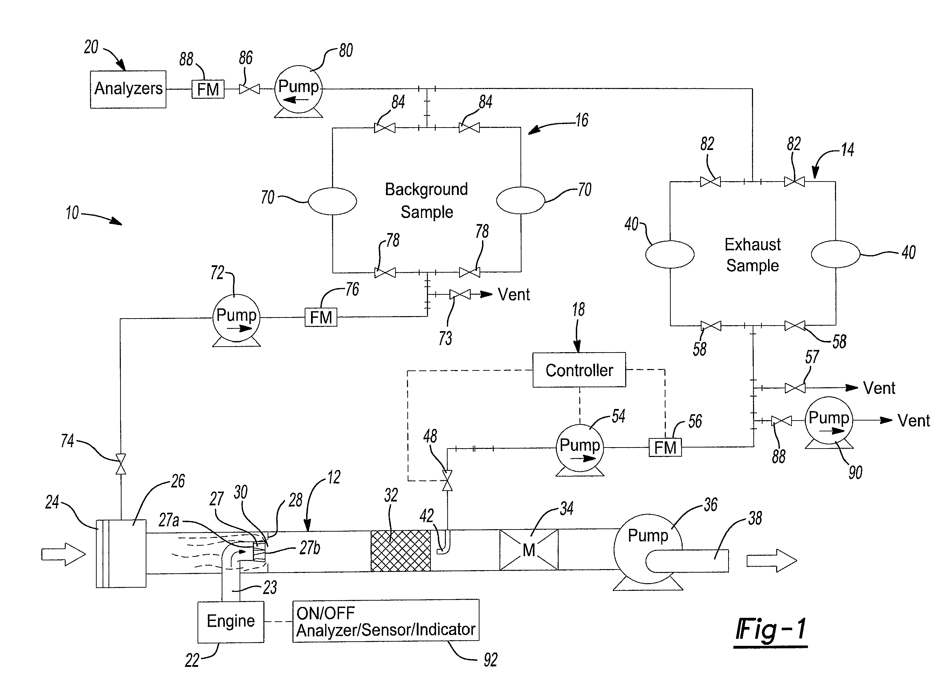

With reference to FIG. 1, an exhaust sampling system 10 is provided and may include a dilution tunnel 12, an exhaust collection unit 14, a background collection unit 16, a controller 18, and one or more analyzers 20. As will be described in greater detail below, the exhaust collection unit 14 collects diluted exhaust gas from the dilution tunnel 12 and provides a sample of the diluted exhaust gas to the analyzers 20 to allow the analyzers 20 to determine a concentration and/or mass of pollutants in the diluted exhaust gas sample.

The dilution tunnel 12 is fluidly coupled to an engine 22 and receives a stream of exhaust gas from the engine 22. The exhaust gas enters the dilution tunnel 12 through an exhaust pipe 23. The dilution tunnel 12 is also fluidly coupled to a dilution gas inlet 24 that provides dilution gas to the dilution tunnel 12. The dilution gas may be ambient air. The dilution gas inlet 24 may include a filter 26 that removes impurities from the dilution gas stream prior to the gas stream entering the dilution tunnel 12. The dilution tunnel 12 is an example of a mixing passage in which exhaust gas is mixed with dilution gas.

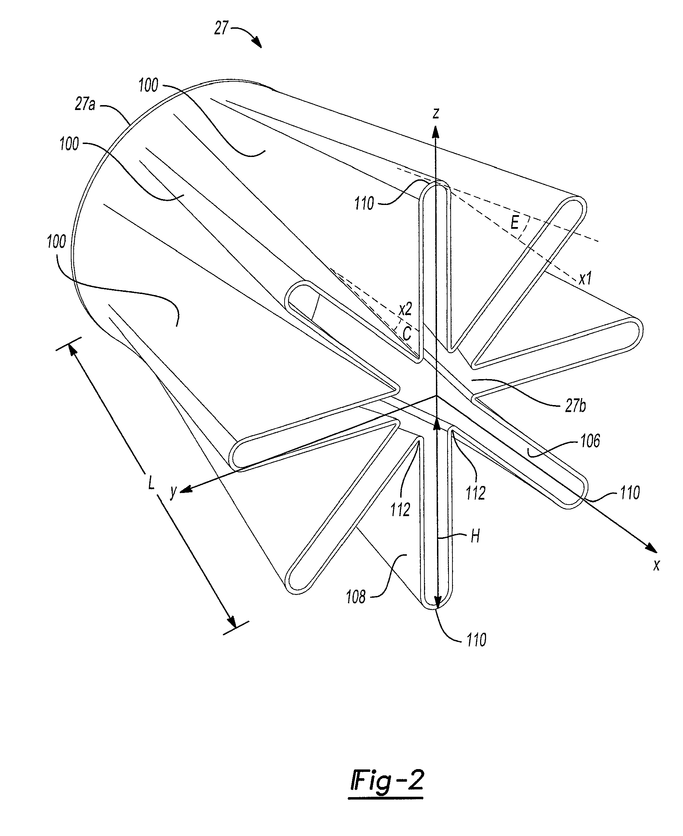

In the example shown in FIG. 1, the exhaust gas travels from the engine 22 through the exhaust pipe 23, and then through a mixer 27 that is disposed in the dilution tunnel 12. The mixer 27 receives exhaust gas from the exhaust pipe 23, while dilution gas from the dilution gas inlet 24 flows along the exterior of the mixer 27. The mixer 27 has an inlet 27a and an outlet 27b. The mixer inlet 27a is in fluid communication with the exhaust pipe 23. The mixer outlet 27b is disposed downstream of the mixer inlet 27a and provides exhaust gas to the dilution tunnel 12. The structure of the mixer 27 (as shown in FIGS. 2-5) facilitates the formation of an extended shear layer between the exhaust gas and the dilution gas, thereby enhancing mixing of the exhaust gas and the dilution gas. The exhaust gas may also include particulate matter, in which case the mixer 27 enhances mixing of the particulate matter and the dilution gas. The inlet 27a of the mixer 27 may be coupled to the exhaust pipe 23 and/or may be concentrically disposed about the exhaust pipe 23. The mixer 27 may be fixed to the exhaust pipe 23 and/or the dilution tunnel 12 to prevent the mixer 27 from rotating relative to the exhaust pipe 23. In one example, the mixer 27 is connected to the exhaust pipe 23 using an airtight connection so that only exhaust gas from the exhaust pipe 23 may flow into the mixer inlet 27a.

In various implementations, a mixing plate 28 may be disposed within the dilution tunnel 12 at or adjacent to the outlet 27b of the mixer 27. For example, the mixing plate 28 may be disposed within the same plane at the mixer outlet 27b or downstream of the mixer outlet 27b. The mixing plate 28 may include an opening or mixing aperture 30 formed therethrough. The mixing aperture 30 cooperates with a body of the mixing plate 28 to cause additional mixing of the exhaust gas and the dilution gas as the gas mixture flows through the mixing aperture 30 of the mixing plate 28. Specifically, a portion of the diluted exhaust gas downstream of the mixing plate 28 is temporarily shielded or blocked by the body of the mixing plate 28, and therefore flows at or near zero (0) cubic feet per minute (ft³/min), while a portion of the diluted exhaust gas flows through the mixing aperture 30 at a higher rate. As a result, a shear layer is formed downstream of the mixing plate 28 between the blocked gas and the gas flowing through the mixing aperture 30, which further mixes the dilution gas and the exhaust gas. Although the system 10 is shown in FIG. 1 as including the mixing plate 28, the system 10 may only include the mixer 27 and might not include the mixing plate 28.

A heat exchanger 32 may or may not be included in the system 10 and, if included, may be located along a length of the dilution tunnel 12 and may be used to maintain the mixture of exhaust gas and dilution gas at a desired temperature. The temperature of the mixture may be determined by a temperature sensor 34 or other measuring device disposed downstream of the heat exchanger 32.

A pump 36 may be fluidly coupled to the dilution tunnel 12 at an opposite end of the dilution tunnel 12 than the dilution gas inlet 24. The pump 36 may impart a fluid force on the dilution tunnel 12 to draw dilution gas into the dilution gas inlet 24 and through the filter 26. The force imparted on the dilution gas inlet 24 causes dilution gas and exhaust gas to enter the dilution tunnel 12.

With continued reference to FIG. 1, the exhaust collection unit 14 may be fluidly coupled to the dilution tunnel 12 to receive a portion of the diluted exhaust gas (i.e., the homogeneous mixture of dilution gas and exhaust gas) disposed within and flowing through the dilution tunnel 12. The exhaust collection unit 14 may receive and store a portion of the diluted exhaust gas prior to the diluted exhaust gas being analyzed by the analyzers 20. Alternatively, the exhaust collection unit 14 may collect other substances such as particulate matter from the diluted exhaust gas, and the amount of the substances collected may be measured.

The exhaust collection unit 14 may include one or more sample bags 40 that store the diluted exhaust gas therein. The sample bags 40 may be fluidly coupled to a sample probe 42 that is in fluid communication with the dilution tunnel 12. The sample probe 42 extracts a sample of the diluted exhaust gas from the dilution tunnel 12 and communicates the extracted sample of diluted exhaust gas to the sample bags 40 for storage.

In various implementations, the exhaust collection unit 14 may include a different type of accumulator other than the sample bags 40. For example, collection filters, impingers, or bubblers may be used in place of the sample bags 40. The collection filters collect particulate matter in the diluted exhaust gas as the diluted exhaust gas flows through the collection filters. The impingers accumulate formaldehyde in the diluted exhaust gas as the diluted exhaust gas flows through the impingers. The bubblers contain distilled water that removes alcohol from the diluted exhaust gas as the diluted exhaust gas flows through the bubblers.

The sample probe 42 may be fluidly coupled to a control valve 48. The control valve 48 controls the flow of diluted exhaust gas from the sample probe 42 to the sample bags 40. The control valve 48 may be a solenoid-actuated valve, for example, that is movable between an open state and a closed state. Alternatively, the control valve 48 may be a stepper valve that is incrementally movable from a fully open state to a closed state. In other words, the control valve 48 may be a variable valve having any number of open states between the fully open state and the fully closed state to provide a degree of adjustability to the control valve 48. Accordingly, if the control valve 48 includes a stepper valve, the control valve 48 may meter the flow of diluted exhaust gas from the dilution tunnel 12 to the sample bags 40 to finely control the extraction rate of the diluted exhaust gas and, ultimately, the amount of diluted exhaust gas received by the sample bags 40 during a test interval or test phase.

Diluted exhaust gas may be received by the sample probe 42 and may be drawn through the control valve 48 by a pump 54. Specifically, the pump 54 may be disposed downstream of the control valve 48 and may impart a force on the sample probe 42 to cause diluted exhaust gas to be drawn into the sample probe 42 and to flow through the control valve 48. In implementations where one or more collection filters are used in place of the sample bags 40, the collection filters may be disposed in the flow path containing the control valve 48 and the pump 54, and the pump 54 may draw the diluted exhaust gas through the collection filters.

The diluted exhaust gas drawn through the control valve 48 may also flow through a flow meter 56 prior to being received by the sample bag 40. The diluted exhaust gas may be received by one or more of the sample bags 40, whereby flow of the diluted exhaust gas into the respective sample bags 40 is controlled by a control valve 58 disposed upstream of each of the sample bags 40. In various implementations, the control valve 48 may be replaced with a flow control device such as a mass flow controller that includes a control valve and a flow meter. Since the mass flow controller includes a flow meter, the flow meter 56 may be omitted in these implementations.

As shown in FIG. 1, the controller 18 may be in communication with the flow meter 56, the pump 54, and the control valve 48. The controller 18 may adjust the amount by which the control valve 48 is opened to control the amount of the diluted exhaust gas supplied to the sample bags 40 during a test interval or test phase. The background collection unit 16 may be used by the analyzers 20 when determining the emission mass contained within the diluted exhaust gas provided by the exhaust collection unit 14. Specifically, the analyzers 20 may analyze a sample of the dilution gas provided to the dilution tunnel 12 at the dilution gas inlet 24 to allow the analyzers 20 to account for any background contaminates within the dilution gas supplied at the dilution gas inlet 24.

The background collection unit 16 may include one or more sample bags 70, a pump 72, and a flow control device such as a control valve 74. The pump 72 may draw dilution gas from the filter 26 through the control valve 74 when the control valve 74 is in an open state. The dilution gas drawn from the filter 26 by the pump 72 may be directed through a flow meter 76 prior to being received by the sample bags 70. The dilution gas may flow through the flow meter 76 and may be received by the sample bags 70 for collection. The sample bags 70 may be respectively associated with control valves 78 that selectively permit the flow of dilution gas into one or more of the sample bags 70.

With continued reference to FIG. 1, the analyzers 20 is shown as being fluidly coupled to the exhaust collection unit 14 and as being fluidly coupled to the background collection unit 16. Accordingly, the analyzers 20 may receive a diluted exhaust gas sample from the exhaust collection unit 14 and may receive a dilution gas sample from the background collection unit 16.

The analyzers 20 may receive a sample of diluted exhaust gas from the exhaust collection unit 14 and/or may receive a sample of dilution gas from the background collection unit 16 by imparting a force on the fluid contained within the units 14, 16 via a pump 80. The pump 80 may draw diluted exhaust gas from the exhaust collection unit 14 when one or more control valves 82 associated with the exhaust collection unit 14 are in an open state. Likewise, the pump 80 may draw dilution gas from the background collection unit 16 when one or more control valves 84 associated with the background collection unit 16 are in an open state. The diluted exhaust gas sample or dilution gas sample may be drawn from the respective units 14, 16 and may flow through a control valve 86 and flow meter 88 prior to reaching the analyzers 20. Once the analyzers 20 receive the diluted exhaust gas sample from the exhaust collection unit 14 and/or the dilution gas sample from the background collection unit 16, the analyzers 20 may determine the pollutant mass contained within the diluted exhaust gas sample.

While not specifically illustrated in FIG. 1, the controller 18 may be in communication with the temperature sensor 34, the pumps 36, 54, 72, 80, the control valves 48, 58, 74, 82, 84, 86, and the flow meters 56, 76. Accordingly, the controller 18 may receive operating data from the temperature sensor 34 and from the flow meters 56, 76, and may use the foregoing information to control the pumps 36, 54, 72, 80 and the control valves 48, 58, 74, 82, 84, 86. In addition, during a test phase, the controller 18 may open a valve 57 to vent diluted exhaust gas instead of supplying the diluted exhaust gas to the sample bags. Further, before initiating a test phase, the controller 18 may open a valve 89 and energize a pump 90 that may be used to evacuate any air disposed within the sample bags 40.

With reference to FIGS. 2-5, the structure of the mixer 27 is shown in greater detail. As discussed above, the mixer 27 includes the inlet 27a and the outlet 27b. The mixer 27 has a length L that extends from the mixer inlet 27a to the mixer outlet 27b along a central longitudinal axis X. The mixer 27 has a plurality of radially extending lobes 100 that extend to the mixer outlet 27b and are circumferentially disposed about the central longitudinal axis X.

As shown in FIG. 2, the mixer 27 includes an inner surface 106 and an outer surface 108. The outer surface 108 defines a peak 110 at each of the lobes 100 and a valley 112 between adjacent ones of the lobes 100. Each of the lobes 100 has a height H that extends from the adjacent valleys 112 to the peak 110 of the respective lobe 100. The peaks 110 extend at an expansion angle E relative to the central longitudinal axis X. For ease of illustration, the expansion angle E is shown relative to a longitudinal axis X1, which extends parallel to the central longitudinal axis X and is offset relative to the central longitudinal axis X in a direction that is labeled Z in FIG. 2. The valleys 112 extend at a contraction angle C with respect to the central longitudinal axis X. For ease of illustration, the contraction angle C is shown relative to a longitudinal axis X2, which extends parallel to the central longitudinal axis X and is offset relative to the central longitudinal axis X in the direction Z.

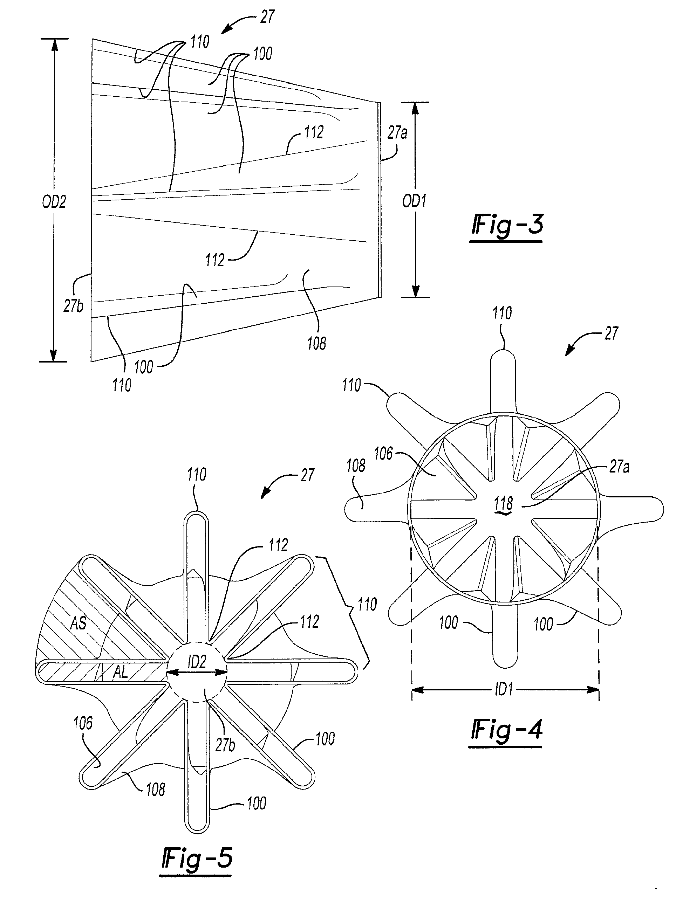

As shown in FIG. 3, the mixer 27 has a first outer diameter OD1 at the mixer inlet 27a and a second outer diameter OD2 at the mixer outlet 27b. The second outer diameter OD2 extends through the peaks 110 of all of the lobes 100 and is greater than the first outer diameter OD1. Thus, the lobes 100 expand radially outward from the mixer inlet 27a to the mixer outlet 27b. The degree to which the lobes 100 expand radially outward is indicated by the expansion angle E shown in FIG. 2. In various implementations, the first outer diameter OD1 of the mixer 27 at the mixer inlet 27a may be greater than or equal to the diameter of the exhaust pipe 23, and the second outer diameter OD2 of the mixer 27 at the mixer outlet 27b may be less than or equal to the diameter of the mixing aperture 30. Additionally or alternatively, the second outer diameter OD2 of the mixer 27 at the mixer outlet 27b may be less than or equal to the inner diameter of the tunnel 12. For example, when the system 10 does not include the mixing plate 28, the second outer diameter OD2 of the mixer 27 may be selected based on the inner diameter of the tunnel 12, rather than the diameter of the mixer aperture 30, to ensure that the second outer diameter OD2 of the mixer 27 is less than or equal to the inner diameter of the tunnel 12.

As shown in FIGS. 4 and 5, the mixer 27 has a first inner diameter ID1 at the mixer inlet 27a and a second inner diameter ID2 at the mixer outlet 27b. The second inner diameter ID2 extends through the valleys 112 of all of the lobes 100 and is less than the first inner diameter ID1. Thus, the valleys 112 between the lobes 100 contract radially inward from the mixer inlet 27a to the mixer outlet 27b. The degree to which the valleys 112 between the lobes 100 contract radially inward is indicated by the contraction angle C shown in FIG. 2.

In various implementations, the second inner diameter ID2 of the mixer 27 at the mixer outlet 27b may be made as close to zero (O) as possible while satisfying manufacturing and cost constraints. Decreasing the second inner diameter ID2 of the mixer 27 forces more exhaust gas to flow through the lobes 100 instead of through the portion of the exhaust gas passage 118 disposed within the second inner diameter ID2. In turn, more of the exhaust gas exiting the mixer outlet 27b encounters the shear layer created by the lobes 100. As a result, the ability of the mixer 27 to mix the exhaust gas and the dilution gas is further improved.

In the example shown in FIGS. 2-5, the number of radially extending lobes 100 on the mixer 27 is eight (8). Although the drawings indicate eight (8) lobes 100, it should be understood that any number of lobes 100 for the mixer 27 may be employed while remaining within the scope of the present disclosure.

The expansion angle E may be greater than about zero (0) degrees and less than about fifty (50) degrees. In a preferred embodiment, the expansion angle E is about twelve and one half (12.5) degrees. The contraction angle C may be greater than or equal to about zero (0) degrees and less than or equal to about fifty (50) degrees. In a preferred embodiment, the contraction angle C is about thirty (30) degrees.

The structure of the mixer 27 facilitates mixing of the exhaust gas and the dilution gas. Specifically, the dilution gas flows around the outer surface 108 of the mixer 27 and the exhaust gas flows through an exhaust gas passage 118 defined by the inner surface 106 of the mixer 27. The exhaust gas may flow at a first rate and the dilution gas may flow at a second rate that is greater than the first rate, which may facilitate the formation of a shear layer between the dilution gas and the exhaust gas at the outlet 27b of the mixer. In addition, the flow rate of the dilution gas may increase as the flow rate of the exhaust gas decreases and vice versa such that the total flow rate of the exhaust and dilution gas remains generally constant. For example, the exhaust gas may have a flow rate of about ten (10) ft³/min at idle and about one hundred twenty (120) ft³/min at full throttle, while the dilution gas may have a flow rate of about three hundred ten (310) ft³/min at idle and about two hundred (200) ft³/min at full throttle. Thus, in this example, the total flow rate of the exhaust and dilution gas remains constant at three hundred twenty (320) ft³/min. The volume ratio of dilution gas to exhaust gas may be about two (2) to about thirty (30) parts dilution gas to one (1) part exhaust gas.

Some exhaust sampling systems have only a mixing plate and a mixing aperture, such as the mixing plate 28 and the mixing aperture 30 shown in FIG. 1, but do not have a mixer such as the mixer 27. These exhaust sampling systems may do a satisfactory job of mixing the exhaust gas and the dilution gas at higher engine speeds. At higher engine speeds, the exhaust gas forms a stream having an effective diameter that is slightly less than the diameter of the mixing aperture 30. Therefore, the exhaust gas stream encounters a shear layer formed downstream of the mixing plate 28 between gas that is temporarily blocked by the body of the mixing plate 28, flowing at or near zero (0) ft³/min, and gas that is flowing through the mixing aperture 30 at a higher flow rate.

However, at idle speeds, exhaust gas tends to form a stream with an effective diameter that is less than the effective diameter of the stream formed by the exhaust gas at higher engine speeds and considerably less than the diameter of the mixing aperture 30. Thus, the exhaust gas stream does not encounter the shear layer formed between blocked and flowing exhaust gas, or at least encounters the shear layer less. Therefore, exhaust sampling systems that have only a mixing plate with a mixing aperture tend to do a poor job of mixing the exhaust gas and the dilution gas at idle speeds.

In contrast, with the system 10, the plurality of radially extending lobes 100 increase the length of the shear layer between the dilution gas and the exhaust gas at the outlet 27b of the mixer 27, thereby promoting mixing at all throttle conditions of the engine 22. For example, the length of the shear layer created by the mixer 27 is greater than the length of a shear layer created by a cylindrical pipe that has the same effective flow area but does not have any lobes. The length of the shear layer created by the mixer 27a can be further increased by increasing the number of lobes.

There are several other design parameters of the mixer 27 that may be adjusted to improve the degree of mixing besides the number of lobes on the mixer 27. These parameters include the expansion angle E, the contraction angle C, the flow area of the exhaust gas passage 118 at the mixer outlet 27b, and the length L of the mixer 27. In one example, the expansion angle E may be about 12.5 degrees, the contraction angle C may be about 30 degrees, the first inner diameter ID1 may be equal to the diameter of the exhaust pipe 23, and the second outer diameter OD2 may be equal to the diameter of the mixing aperture 30. In this example, the length L of the mixer 27 may be dictated by all of the aforementioned parameters (i.e., the expansion angle E, the contraction angle C, the first inner diameter ID1, and the second outer diameter OD2).

In addition, the flow area of the exhaust gas passage 118 at the mixer outlet 27b may be designed to yield a target amount of shear at a specified dilution ratio. For example, the mixer 27 may be designed so that the flow area of the lobes 100 is greater than the flow area of the spaces between the lobes 100. For reference, the flow area of one of the lobes 100 is labelled A_{L} in FIG. 5, and the flow area of one of the spaces between the lobes 100 is labelled As in FIG. 5. When the flow area of the lobes 100 is greater than the flow area of the spaces between the lobes 100, exhaust gas passing through the lobes 100 flows at a rate that is less than a rate at which dilution gas flows along the outer surface of the mixer 27 between the lobes 100. As a result, the exhaust gas may be better mixed with dilution gas at the target dilution ratio due to the difference between the exhaust gas flow rate and the dilution gas flow rate. In another example, to achieve the target amount of shear at a specified dilution ratio of two parts dilution gas to one part exhaust gas (2:1), the flow area of the lobes 100 may be twice the flow area of the spaces between the lobes 100. In turn, exhaust gas passing through the lobes 100 flows at a rate that is one-half (1/2) of a rate at which dilution gas flows along the outer surface of the mixer 27 between the lobes 100. The flow area of the lobes 100 may be large enough so that the mixer 27 yields the target amount of shear even at a minimum dilution ratio (e.g., two parts dilution gas to one part exhaust gas).

As shown in FIG. 1, the mixer 27 may be disposed downstream of the exhaust pipe 23 and upstream of the mixing plate 28. Various factors may influence the relative locations of the outlet of the exhaust pipe 23, the mixer 27, and the mixing plate 28, as well as the design of the mixer 27 and the pump 36. For example, increasing the number of lobes on the mixer 27 may increase the length of shear, which may increase the flow restriction imparted by the mixer 27. As the flow restriction imparted by the mixer 27 increases, the size of the pump 36 may be increased to compensate for the increased flow restriction. Thus, the size of the pump 36 may be selected based on the number of lobes on the mixer 27 and vice versa.

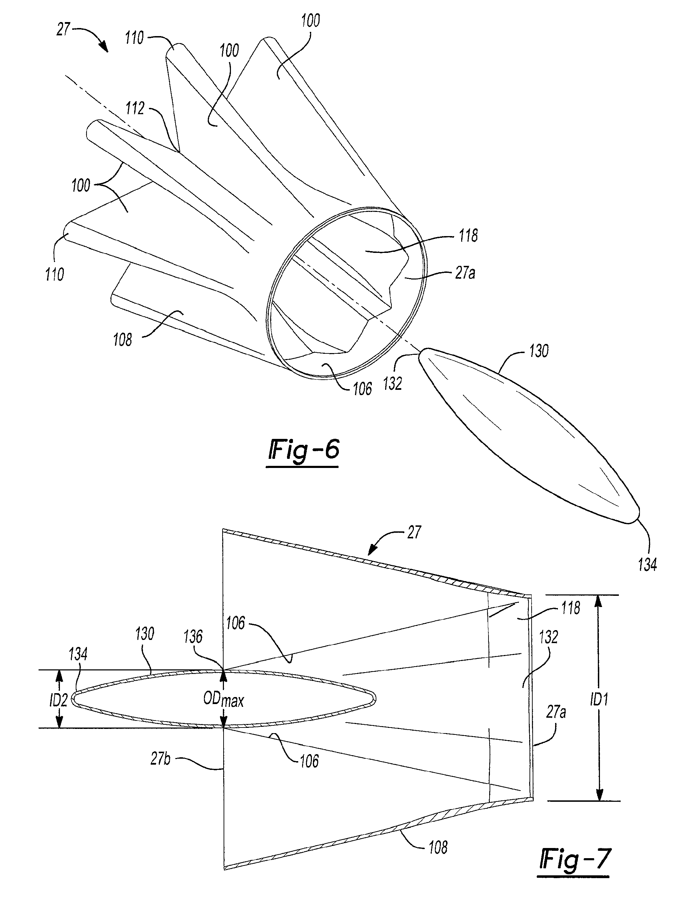

There are still other ways to improve the degree at which the mixer 27 mixes exhaust gas and dilution gas. For example, with reference to FIGS. 6 and 7, a plug 130 may be positioned in the exhaust gas passage 118 of the mixer 27. The plug 130 may have a prolate (elongated) spheroid shape, like that of an American football, in order to minimize the flow restriction imparted by the plug 130. Alternatively, the plug 130 may have a conical shape such as that of a single cone or a double-sided cone (e.g., two cones with the larger ends of the two cones placed end-to-end). The plug 130 may have a first end 132, a second end 134, and a midpoint 136 disposed midway between the first and second ends 132 and 134. The plug 130 may have a maximum outer diameter ODmax that is disposed at or adjacent to the mixer outlet 27b. The maximum outer diameter ODmax of the plug 130 may be less than or equal to the second inner diameter ID2 of the mixer 27. In the example shown in FIG. 1, the maximum outer diameter ODmax of the plug 130 is disposed at its midpoint 136, and therefore the midpoint 136 of the plug 130 is disposed at the mixer outlet 27b. The plug 130 may be formed separate from the mixer 27 and attached to the mixer 27 to form a mixer assembly. The plug 130 may be fixed to the inner surface 106 of the mixer 27 using, for example, a weld or an interference fit.

The plug 130 forces exhaust gas to flow through the lobes 100 instead of through the portion of the exhaust gas passage 118 disposed within the second inner diameter ID2 of the mixer 27. In turn, more of the exhaust gas flowing through the exhaust gas passage 118 encounters the shear layer created by the lobes 100 as the exhaust gas exits the mixer outlet 27b. In this way, the plug 130 further improves the degree at which the mixer 27 mixes exhaust gas and dilution gas.

Although the mixer 27 is described in the context of a CVS or full flow sampling system, the mixer 27 may be used in any exhaust gas sampling system that mixes two flows and subsequently measures a pollutant concentration or mass of the mixed flow. For example, the mixer 27 may be used in a partial flow sampling system, a BMD system, a modal mini diluter (MMD) system, or a propane injection kit.

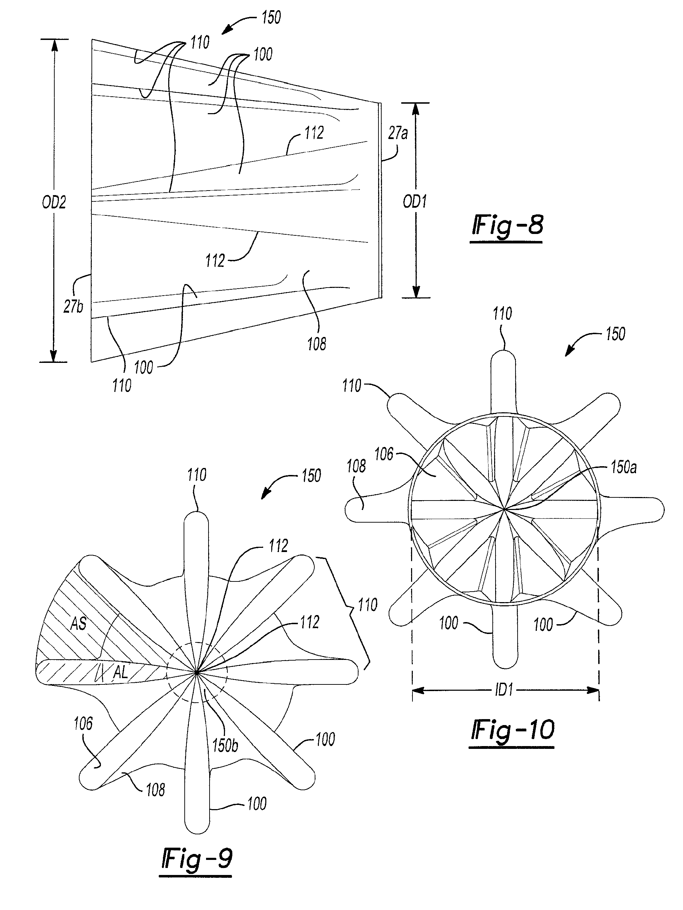

With reference to FIGS. 8-10, a mixer 150 having an inlet 150a and an outlet 150b is similar to the mixer 27 such that only differences between the mixer 150 and the mixer 27 will now be described. While the second inner diameter ID2 of the mixer 27 at the mixer outlet 27b may be made as close to zero as possible to improve mixing between exhaust gas and dilution gas, the second inner diameter ID2 of the mixer 150 is zero. To this end, at the outlet 150b of the mixer 150, the valleys 112 of the mixer 150 meet one another at the center of the mixer 150 so that there is no space between the valleys 112. Thus, all of the exhaust gas passing through the exhaust gas passage 118 of the mixer 150 is forced to encounter the shear layer created by the lobes 100.

A method of mixing exhaust gas and dilution gas is also provided. The method may include conveying the exhaust gas from the engine 22 through the exhaust pipe 23, and then through the exhaust gas passage 118 of the mixer 27. In one example, the exhaust gas is conveyed at a flow rate of greater than or equal to about five (5) ft³/min and less than or equal to about one hundred twenty (120) ft³/min. The method may also include a step of conveying the dilution gas around the outer surface 108 of the mixer 27. The flow of the exhaust gas through the exhaust gas passage 118 of the mixer 27 and the flow of the dilution gas around the radially extending lobes 100 of the mixer 27 facilitate the formation of a shear layer between the exhaust gas and the dilution gas to promote mixing of the exhaust gas and the dilution gas. The method may also include conveying the exhaust gas and the dilution gas through the mixing aperture 30 of the mixing plate 28.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

It follows a list of further embodiments:
(1) A mixing system for an exhaust sampling system, the mixing system comprising:
   a mixing passage having a dilution gas inlet configured to receive a dilution gas;
   an exhaust pipe that provides exhaust gas to the mixing passage; and
   a mixer disposed within the mixing passage and configured to mix the dilution gas and the exhaust gas, the mixer having an inlet and an outlet, the mixer inlet being configured to receive the exhaust gas, the mixer outlet being disposed downstream of the mixer inlet, the mixer including a plurality of radially extending lobes that are circumferentially disposed about a longitudinal axis of the mixer.
(2) The mixing system of embodiment 1, wherein the lobes extend to the outlet of the mixer.
(3) The mixing system of embodiment 1, wherein the lobes expand radially outward from the mixer inlet to the mixer outlet such that a first outer diameter of the mixer at the mixer inlet is less than a second outer diameter of the mixer at the mixer outlet.
(4) The mixing system of embodiment 1, wherein the mixer includes valleys between the lobes that expand radially inward from the mixer inlet to the mixer outlet such that a first inner diameter of the mixer at the mixer inlet is greater than a second inner diameter of the mixer at the mixer outlet.
(5) The mixing system of embodiment 1, further comprising a mixing plate disposed within the mixing passage downstream of the mixer, the mixing plate having a mixing aperture configured to further mix the dilution gas and the exhaust gas.
(6) The mixing system of embodiment 5, wherein the mixer is disposed downstream of the exhaust pipe and upstream of the mixing plate.
(7) The mixing system of embodiment 5, wherein a first inner diameter of the mixer at the inlet of the mixer is equal to the diameter of the exhaust pipe and a second outer diameter of the mixer at the outlet of the mixer is equal to the diameter of the mixing aperture.
(8) The mixing system of embodiment 1, wherein the inlet of the mixer is coupled to the exhaust pipe.
(9) The mixing system of embodiment 8, wherein the inlet of the mixer is concentrically disposed about the exhaust pipe.
(10) The mixing system of embodiment 1, wherein the mixer is fixed to at least one of the mixing passage and the exhaust pipe to prevent the mixer from rotating relative to the exhaust pipe.
(11) The mixing system of embodiment 1, wherein the mixer includes an inner surface and an outer surface, the outer surface defining a peak at each of the lobes and a valley between adjacent ones of the lobes, each of the peaks defining an expansion angle relative to the longitudinal axis of the mixer, each of the valleys defining a contraction angle relative to the longitudinal axis.
(12) The mixing system of embodiment 11, wherein the expansion angle is greater than or equal to about zero (0) degrees and less than or equal to about fifty (50) degrees.
(13) The mixing system of embodiment 12, wherein the expansion angle is about twelve and one half (12.5) degrees.
(14) The mixing system of embodiment 11, wherein the contraction angle is greater than or equal to about zero (0) degrees and less than or equal to about fifty (50) degrees.
(15) The mixing system of embodiment 14, wherein the contraction angle is about thirty (30) degrees.
(16) A method of mixing an exhaust gas and a dilution gas in an exhaust sampling system, the method comprising steps of:
   (a) conveying an exhaust gas through an exhaust pipe and an exhaust gas passage of a mixer; and
   (b) conveying a dilution gas around an outer surface of the mixer, the mixer having a plurality of radially extending lobes, wherein the flow of the exhaust gas through the exhaust gas passage of the mixer and the flow of the dilution gas around the radially extending lobes of the mixer facilitate the formation of a shear layer between the exhaust gas and the dilution gas to promote mixing of the exhaust gas and the dilution gas.
(17) The method of embodiment 16, further comprising conveying the exhaust gas and the dilution gas through a mixing aperture of a mixing plate.
(18) A mixing system for an exhaust sampling system, the mixing system comprising:
   a mixer configured to mix dilution gas and exhaust gas in a mixing passage of the exhaust sampling system, the mixer having an inlet and an outlet and including a plurality of radially extending lobes that are circumferentially disposed about a longitudinal axis of the mixer and that extend to the mixer outlet, the lobes expanding radially outward from the mixer inlet to the mixer outlet such that a first outer diameter of the mixer at the mixer inlet is less than a second outer diameter of the mixer at the mixer outlet, the mixer including valleys between the lobes that expand radially inward from the mixer inlet to the mixer outlet such that a first inner diameter of the mixer at the mixer inlet is greater than a second inner diameter of the mixer at the mixer outlet.
(19) The mixing system of embodiment 18, further comprising a plug positioned within an exhaust gas passage of the mixer and extending from the inlet of the mixer to the outlet of the mixer.
(20) The mixing system of embodiment 19, wherein the plug has an elongated spheroid shape.
(21) The mixing system of embodiment 19, wherein the plug has a conical shape.
(22) The mixing system of embodiment 19, wherein second inner diameter of the mixer at the mixer outlet is equal to zero.

## Claims

1. A mixing system for an exhaust sampling system (10), the mixing system comprising:
a mixing passage (12) having a dilution gas inlet (24) configured to receive a dilution gas;
an exhaust pipe (23) that provides exhaust gas to the mixing passage (12); and
a mixer (27) disposed within the mixing passage (12) and configured to mix the dilution gas and the exhaust gas, the mixer (27) having an inlet (27a) and an outlet (27b), the mixer inlet (27a) being configured to receive the exhaust gas, the mixer outlet (27b) being disposed downstream of the mixer inlet (27a), the mixer (27) including a plurality of radially extending lobes (100) that are circumferentially disposed about a longitudinal axis (x) of the mixer (27).

2. The mixing system of Claim 1, wherein the lobes (100) extend to the outlet (27b) of the mixer (27).

3. The mixing system of Claims 1 or 2, wherein the lobes (100) expand radially outward from the mixer inlet (27a) to the mixer outlet (27b) such that a first outer diameter (OD1) of the mixer (27) at the mixer inlet (27a) is less than a second outer diameter (OD2) of the mixer (27 at the mixer outlet (27b).

4. The mixing system of any of Claims 1-3, wherein the mixer (27) includes valleys (112) between the lobes (100) that expand radially inward from the mixer inlet (27a) to the mixer outlet (27b) such that a first inner diameter (ID1) of the mixer (27) at the mixer inlet (27a) is greater than a second inner diameter (ID2) of the mixer (27) at the mixer outlet (27b).

5. The mixing system of any of Claims 1-4, further comprising a mixing plate (28) disposed within the mixing passage (12) downstream of the mixer (27), the mixing plate (28) having a mixing aperture (30) configured to further mix the dilution gas and the exhaust gas.

6. The mixing system of Claim 5, wherein the mixer (27) is disposed downstream of the exhaust pipe (23) and upstream of the mixing plate (28).

7. The mixing system of Claims 5 or 6, wherein a first inner diameter (ID1) of the mixer (27) at the inlet (27a) of the mixer (27) is equal to the diameter of the exhaust pipe (23) and a second outer diameter (OD2) of the mixer (27) at the outlet (27b) of the mixer (27) is equal to the diameter of the mixing aperture (30).

8. The mixing system of any of Claims 1-7, wherein the inlet (27a) of the mixer (27) is coupled to the exhaust pipe (23).

9. The mixing system of Claim 8, wherein the inlet (27a) of the mixer (27) is concentrically disposed about the exhaust pipe (23).

10. The mixing system of any of Claims 1-9, wherein the mixer (27) is fixed to at least one of the mixing passage (12) and the exhaust pipe (23) to prevent the mixer (27) from rotating relative to the exhaust pipe (23).

11. The mixing system of any of Claims 1-10, wherein the mixer (27) includes an inner surface (106) and an outer surface (108), the outer surface (108) defining a peak (110) at each of the lobes (100) and a valley (112) between adjacent ones of the lobes (100), each of the peaks (110) defining an expansion angle (E) relative to the longitudinal axis (x) of the mixer (27), each of the valleys (112) defining a contraction angle (C) relative to the longitudinal axis (x).

12. The mixing system of Claim 11, wherein the expansion angle (E) is greater than or equal to about zero (0) degrees and less than or equal to about fifty (50) degrees.

13. The mixing system of Claim 11 or 12, wherein the contraction angle (C) is greater than or equal to about zero (0) degrees and less than or equal to about fifty (50) degrees.

14. A method of mixing an exhaust gas and a dilution gas in an exhaust sampling system (10), the method comprising steps of:
(a) conveying an exhaust gas through an exhaust pipe (23) and an exhaust gas passage (118) of a mixer (27); and
(b) conveying a dilution gas around an outer surface (108) of the mixer (27), the mixer (27) having a plurality of radially extending lobes (100), wherein the flow of the exhaust gas through the exhaust gas passage (118) of the mixer (27) and the flow of the dilution gas around the radially extending lobes (100) of the mixer (27) facilitate the formation of a shear layer between the exhaust gas and the dilution gas to promote mixing of the exhaust gas and the dilution gas.

15. The method of Claim 14, further comprising conveying the exhaust gas and the dilution gas through a mixing aperture (30) of a mixing plate (28).
